# EUROPÄISCHE PATENTSCHRIFT

(11) **EP 3 701 251 B1**
(45) Veröffentlichungstag und Bekanntmachung des Hinweises auf die Patenterteilung: **23.08.2023**
(21) Anmeldenummer: 18795449.0
(22) Anmeldetag: 24.10.2018
(51) Int. Cl.: G01N 21/95, F03D 17/00, G01M 5/00, G01M 11/08

(54) **VORRICHTUNG UND VERFAHREN ZUR OPTISCHEN ÜBERWACHUNG BEWEGTER BAUTEILE**
DEVICE AND METHOD FOR THE OPTICAL MONITORING OF MOVING COMPONENTS
DISPOSITIF ET PROCÉDÉ DE SURVEILLANCE OPTIQUE D'ÉLÉMENTS EN MOUVEMENT

(30) Priorität: 25.10.2017 DE 102017219153
(43) Veröffentlichungstag der Anmeldung: 02.09.2020
(60) Teilanmeldung: 20210883.3
(73) Patentinhaber: Fraunhofer-Gesellschaft zur Förderung der angewandten Forschung e.V., 80686 München (DE); Nawrocki, Holger, 13189 Berlin (DE)
(72) Erfinder: KAUFMANN, Ilja, 76275 Ettlingen (DE); SCHERER-KLÖCKLING, Clemens, 76872 Minfeld (DE); NAWROCKI, Holger, 13189 Berlin (DE)
(74) Vertreter: PATERIS Patentanwälte PartmbB
(86) Internationale Anmeldenummer: PCT/EP2018/079084
(87) Internationale Veröffentlichungsnummer: WO 2019/081543

(56) Entgegenhaltungen:
- EP-A1- 2 887 030
- US-B2- 9 285 296
- ILJA KAUFMANN ET AL: "Remote laser vibrometry for wind turbine blades", SPIE NEWSROOM, 1. April 2016 (2016-04-01), XP055539232, US ISSN: 1818-2259, DOI: 10.1117/2.1201603.006403

## Beschreibung

Die Erfindung betrifft eine Vorrichtung zur optischen Überwachung bewegter Bauteile mit zumindest einer ersten Kamera, deren Bilderfassungsbereich mit einer Nachführeinrichtung beeinflussbar ist und welche dazu eingerichtet ist, zumindest ein Bild von zumindest einem Teil des zu überwachenden Bauteils aufzunehmen. Weiterhin betrifft die Erfindung ein Verfahren zur optischen Überwachung bewegter Bauteile mit zumindest einer ersten Kamera, deren Bilderfassungsbereich mit einer Nachführeinrichtung beeinflussbar wird und welche zumindest ein Bild von zumindest einem Teil des zu überwachenden Bauteils aufnimmt. Vorrichtungen und Verfahren dieser Art können beispielsweise zur Überwachung der Rotorblätter von Windenergieanlagen oder anderen, hochbeanspruchten Bauteilen in Industrieanlagen Verwendung finden.

Aus der US 2017/0011503 A1 ist bekannt, Rotorblätter einer Windenergieanlage mit einer Infrarotkamera im laufenden Betrieb zu untersuchen. Hierzu ist die Infrarotkamera auf einer Schwenk-Neige-Plattform montiert, welche durch ein Steuersignal bewegt wird, welches von einem Funktionsgenerator erzeugt wird. Die Schwenk-Neige-Plattform führt somit einen festprogrammierten Bewegungsablauf aus. Dieser festprogrammierte Bewegungsablauf wird mit dem Durchlauf eines Rotorblattes synchronisiert, sodass kurzzeitig eine Aufnahme des Rotorblattes im laufenden Betrieb möglich ist.

Diese bekannte Vorrichtung weist jedoch den Nachteil auf, dass die Nachführung stets nur kurzzeitig mit der erforderlichen Genauigkeit erfolgt. Das System muss für jede zu erfassende Position auf dem Rotorblatt erneut durch Bedienpersonal ausgerichtet werden. Ebenso muss die Nachführung aufwendig durch den Bediener angepasst werden, wenn sich die Windenergieanlage einer wechselnden Windrichtung anpasst oder sich die Rotationsgeschwindigkeit aufgrund wechselnder Windgeschwindigkeiten ändert.

Weiterhin ist aus der Praxis bekannt, die Rotorblätter einer Windenergieanlage bei Stillstand fotographisch zu erfassen. Hierzu können Hubplattformen, Kräne, Drohnen oder seilunterstützte Zugangstechniken angewendet werden. All diese Verfahren weisen jedoch den Nachteil auf, dass durch das Anhalten der Windenergieanlage Ertragsausfälle entstehen, welche die Wirtschaftlichkeit der Windenergieanlage nachteilig beeinflussen. Darüber hinaus können sich Schäden bei fehlender Beanspruchung im Stillstand anders darstellen als im laufenden Betrieb, sodass Schäden unentdeckt bleiben können.

Die EP 2 887 030 A1 beschreibt eine Nachführung mittels einer Schwenkneigevorrichtung im Rahmen eines Verfahrens zur Messung von Schwingungen von bewegten Objekten, insbesondere von Windturbinenrotorblättern. Zur Messung der Schwingungen findet ein Laser Verwendung, der einem Rotorblatt mittels der Schwenkneigevorrichtung nachgeführt wird.

Ausgehend vom Stand der Technik liegt der Erfindung somit die Aufgabe zugrunde, eine Vorrichtung und ein Verfahren zur optischen Überwachung bewegter Bauteile anzugeben, welche einerseits eine hohe Genauigkeit aufweisen und andererseits unerwünschte Stillstandszeiten vermeiden.

Die Aufgabe wird erfindungsgemäß durch eine Vorrichtung gemäß Anspruch 1, eine Verwendung nach Anspruch 9 und ein Verfahren nach Anspruch 10 gelöst. Vorteilhafte Weiterbildungen der Erfindung finden sich in den Unteransprüchen.

Erfindungsgemäß wird eine Vorrichtung zur optischen Überwachung bewegter Bauteile vorgeschlagen. Das zu überwachende Bauteil kann beispielsweise ein Maschinenelement, ein Teil eines Fahr- oder Flugzeuges oder Teil einer Windenergieanlage sein. Die Nutzung der Vorrichtung ist nicht auf die Überwachung bewegter Bauteile beschränkt, jedoch ist die Vorrichtung hierfür vorteilhaft einsetzbar.

Das bewegte Bauteil kann sich in einem regulären Betriebszustand befinden. Beispielsweise kann eine Windenergieanlage in Betrieb sein, wobei sich deren Rotor dreht. Das zu überwachende Bauteil kann in diesem Fall ein Rotorblatt bzw. der gesamte Rotorstern sein. Ein Flugzeug kann die erfindungsgemäße Vorrichtung überfliegen, beispielsweise im Landeanflug. Das zu überwachende Bauteil kann in diesem Fall eine Tragfläche, eine Rumpfstruktur oder eine Triebwerksgondel sein. Da die erfindungsgemäße Vorrichtung und das erfindungsgemäße Verfahren die optische Überwachung solcher Bauteile in Bewegung ermöglichen, werden unerwünschte Stillstandszeiten der zu überwachenden Bauteile bzw. der mit den Bauteilen ausgerüsteten Maschinen oder Geräte vermieden.

Unter einer Überwachung wird im Sinne der vorliegenden Erfindung eine entweder dauerhafte Kontrolle des Bauteils oder aber auch eine gelegentliche oder nur einmalige Dokumentation eines bewegten Bauteils verstanden.

Die optische Überwachung kann mit zumindest einer ersten Kamera erfolgen. Die zumindest eine erste Kamera kann zumindest ein Bild oder auch eine Mehrzahl von Bildern des zu überwachenden Bauteils anfertigen. Diese Bilder können ausgewertet werden, um mechanische Beschädigungen des zu überwachenden Bauteils zu erkennen.

Die optische Überwachung im Sinne der vorliegenden Beschreibung beschränkt sich nicht auf den sichtbaren Spektralbereich. Vielmehr werden auch fotographische Aufnahmen im infraroten oder ultravioletten Spektralbereich oder mit Gigahertz- oder Terahertzwellen als Bild zur optischen Überwachung im Sinne der vorliegenden Erfindung angesehen. Die technischen Grenzen ergeben sich einzig aus der Verfügbarkeit einer ersten Kamera für den entsprechenden Spektralbereich, insbesondere somit aus der Verfügbarkeit entsprechender Bildsensoren bzw. Filme und Linsen.

Erfindungsgemäß wird vorgeschlagen, die zumindest eine erste Kamera mit einer Nachführeinrichtung auszustatten, welche deren Bilderfassungsbereich beeinflussen kann. Somit kann die erste Kamera der Bewegung des zu überwachenden Bauteils nachgeführt werden. Der Bilderfassungsbereich bleibt somit solange auf das zu überwachende Bauteil oder die zu überwachende Teilfläche des zu überwachenden Bauteils ausgerichtet, bis die erforderlichen Bilder zur Beurteilung des Bauteils erstellt wurden. Sofern das zu überwachende Bauteil großflächig ist, kann dieses zur optischen Überwachung in eine Mehrzahl von Teilflächen untergliedert werden, von welchen jeweils zumindest ein Bild angefertigt wird. Hierzu kann der Bilderfassungsbereich der ersten Kamera mittels der Nachführeinrichtung so beeinflusst werden, dass die Mehrzahl von Teilflächen sequentiell erfasst wird, wobei jeweils zumindest ein Bild angefertigt wird. Auf diese Weise können auch großflächige bewegte Bauteile, beispielsweise Rotorsterne von Windenergieanlagen, im laufenden Betrieb einer optischen Überwachung unterzogen werden. Die auf diese Weise gewonnenen Bilder können nachfolgend automatisiert oder durch Bedienpersonal ausgewertet werden, um beispielsweise mechanische Schäden durch den Anprall von Objekten oder Delaminationen zu erkennen und auf diese Weise eine Überwachung der mechanischen Strukturen zu ermöglichen. Hierdurch kann die noch zu erwartende Lebensdauer bestimmt und/oder ein bevorstehender Ausfall vorhergesehen werden. Dies erlaubt die Vermeidung von Folgeschäden und/oder die Vermeidung einer an sich unnötigen vorbeugenden Wartung und/oder die frühzeitige Erkennung von Schäden, die dann frühzeitig behoben werden können, bevor es zu umfangreicheren Ausfällen kommt.

Erfindungsgemäß wird weiter vorgeschlagen, die Vorrichtung zusätzlich durch zumindest eine zweite Kamera zu ergänzen, welche dazu eingerichtet ist, Bilder des zu überwachenden Bauteils zu erfassen. Die zweite Kamera kann stationär angeordnet sein, d. h. die zweite Kamera ist nicht mit einer Nachführeinrichtung verbunden. Darüber hinaus kann die zweite Kamera in einigen Ausführungsformen der Erfindung einen größeren Bildwinkel aufweisen als die erste Kamera.

Die zweite Kamera weist somit beispielweise ein Weitwinkelobjektiv auf und die erste Kamera weist ein Teleobjektiv auf. Die erste Kamera erfasst somit einen Ausschnitt des zu überwachenden Bauteils mit größerer Genauigkeit oder größerer Auflösung und die zweite Kamera erfasst entweder einen größeren Ausschnitt oder auch das gesamte zu überwachende Bauteil.

Sowohl die erste als auch die zweite Kamera sind in einigen Ausführungsformen der Erfindung Digitalkameras, d. h. die Kameras weisen einen Halbleitersensor zur Bilderfassung auf. Der Halbleitersensor kann beispielsweise ein CMOS-Sensor, ein CCD-Sensor, eine Bildverstärkerröhre oder ähnliche, an sich bekannte Elemente enthalten. Sowohl am Ausgang der ersten als auch am Ausgang der zweiten Kamera steht somit ein analoger oder digitaler Datenstrom zur Verfügung, welcher die erfassten Bilder repräsentiert.

Die Bilddaten der zweiten Kamera werden zumindest einer Steuer- oder Regeleinrichtung zugeführt. Diese erzeugt im Betrieb ein Ansteuersignal für die Nachführeinrichtung. Die Nachführeinrichtung folgt somit diesem Ansteuersignal, sodass der Bilderfassungsbereich der ersten Kamera stets auf das zu überwachende Bauteil bzw. die konkret zu untersuchende Teilfläche ausgerichtet ist. Das Ansteuersignal kann von der Nachführeinrichtung reaktiv aufgrund einer erkannten Bewegung bzw. einer Abweichung der Ist-Position der Kamera von der im Bild erkannten Soll-Position erfolgen.

In einigen Ausführungsformen der Erfindung enthält die Steuer- oder Regeleinrichtung zumindest eine Einrichtung zur Bewegungsvorhersage des zu überwachenden Bauteils. Die Einrichtung zur Bewegungsvorhersage extrahiert aus den Bilddaten der zweiten Kamera das zu überwachende Bauteil und errechnet eine zukünftige Position dieses Bauteils bzw. einer gewünschten Teilfläche der Oberfläche des Bauteils. Hierzu können Daten aus der Vergangenheit verwendet werden, d. h. eine in der Vergangenheit bereits ausgeführte und detektierte Bewegung des zu überwachenden Bauteils wird in die nahe Zukunft fortgeschrieben. In anderen Ausführungsformen der Erfindung kann die Einrichtung zur Bewegungsvorhersage einen optionalen Speicher aufweisen, welcher zur Aufnahme von Zwangsbedingungen der Bewegung eingerichtet ist. Beispielsweise kann für konkrete, zu überwachende Bauteile hinterlegt werden, dass diese sich auf einer Kreisbahn bewegen. Unter Berücksichtigung dieser Zwangsbedingung muss die Einrichtung zur Bewegungsvorhersage somit nur noch die Drehzahl bzw. Winkelgeschwindigkeit und die räumliche Ausrichtung der Achse erfassen, um eine exakte Bewegungsvorhersage zu erstellen. Bei zu überwachenden Bauteilen wie beispielsweise anfliegenden Flugzeugen, welche sich im dreidimensionalen Raum grundsätzlich frei bewegen können, können hingegen andere, freiere Zwangsbedingungen hinterlegt werden, beispielsweise Filter für Kurs und Geschwindigkeit oder Maximalwerte der ersten Ableitungen dieser Werte. Verfahren und Vorrichtung zur Bewegungsvorhersage von Objekten im dreidimensionalen Raum unter Verwendung von Kamerabildern sind dem Fachmann grundsätzlich geläufig. Die vorliegende Erfindung lehrt nicht die Verwendung eines speziellen Algorithmus oder eines speziellen Vorhersagemodells als Lösungsprinzip. Die Daten der Bewegungsvorhersage werden nachfolgend von der Steuer- oder Regelungseinrichtung dazu verwendet, ein Ansteuersignal für die Nachführeinrichtung zu erzeugen.

In einigen Ausführungsformen der Erfindung kann die Steuer- oder Regeleinrichtung zusätzlich einen Speicher zur Aufnahme eines Messprogramms aufweisen. In diesem Speicher können vor Beginn der Messung zu untersuchende Teilflächen des bewegten Bauteils sowie die Reihenfolge der Untersuchung einzelner Teilflächen abgelegt werden. Dies erlaubt eine vollautomatische Überwachung des bewegten Bauteils, indem einzelne Teilflächen mit hoher Genauigkeit erfasst werden, welche nachfolgend entweder einzeln analysiert oder aber zu einer großen, hochauflösenden Aufnahme des zu überwachenden Bauteils zusammengesetzt werden können. Die parallele Bewegungserfassung mithilfe der zweiten Kamera stellt dabei sicher, dass auch bei komplexen Bewegungsabläufen die erste Kamera zuverlässig dem zu überwachenden Bauteil folgt und alle gewünschten Teilflächen reproduzierbar erfasst werden können.

In einigen Ausführungsformen der Erfindung kann die Vorrichtung weiterhin zumindest einen Laser enthalten, dessen Strahlrichtung mit der Nachführeinrichtung beeinflussbar ist. Mittels dieses Lasers kann ein Strahlfleck an vorgebbarer Stelle des zu überwachenden Bauteils erzeugt werden. Die Lage dieses Strahlflecks kann mit der ersten Kamera und/oder der zweiten Kamera erfasst werden. Durch Vergleich der Position des Strahlflecks mit einer gewünschten Sollposition kann ein Regelsignal für die Nachführeinrichtung erzeugt werden, welches die Abweichung der Soll- zur Ist-Position reduziert. Auf diese Weise ist eine Nachführung des Bilderfassungsbereiches der ersten Kamera mit größerer Genauigkeit möglich.

In einigen Ausführungsformen der Erfindung kann der Laser Strahlung im infraroten oder im sichtbaren Spektralbereich aussenden, um auf diese Weise einfach von einer der Kameras erfasst zu werden. Soweit sich der Spektralbereich der ersten Kamera von dem der zweiten Kamera unterscheidet und dieser auf den Laser abgestimmt ist, kann das Laserlicht von der zweiten, nicht aber von der ersten Kamera erfasst werden.

In einigen Ausführungsformen der Erfindung kann die Vorrichtung weiterhin zumindest eine dritte Kamera enthalten, welche dazu eingerichtet ist, den Strahlfleck des Lasers auf dem zu überwachenden Bauteil zu erfassen und der Steuer- oder Regeleinrichtung zuzuführen. In einigen Ausführungsformen der Erfindung kann die dritte Kamera in einem anderen Spektralbereich sensitiv sein als die erste Kamera. Auf diese Weise wird vermieden, dass der Laserstrahl von der ersten Kamera erfasst wird und so fälschlich als Schaden des zu überwachenden Bauteils interpretiert wird.

In einigen Ausführungsformen der Erfindung kann die erste Kamera zusätzlich um ihre optische Achse drehbar sein. Dies erlaubt es, während der Aufnahme des Bildes die relative Ausrichtung der zur erfassenden Teilfläche des Bauteils und der Kamera konstant zu halten. Hierdurch kann Bewegungsunschärfe insbesondere bei der Aufnahme rotierender Bauteile vermieden werden, sodass Aufnahmen mit höherer Qualität zur Verfügung stehen, welche eine genauere Schadensanalyse oder Zustandsdokumentation oder Schadensvorhersage ermöglichen.

In einigen Ausführungsformen der Erfindung kann der Bildsensor der ersten Kamera um die optische Achse der ersten Kamera drehbar sein. Da somit die Masse und Größe des bewegten Bauteils reduziert ist, kann eine Drehung mit geringerem Aufwand oder größerer Geschwindigkeit erfolgen.

Die optische Achse bezeichnet in beiden Fällen die Symmetrieachse der Linsenanordnung des Objektivs und damit auch die Symmetrieachse des vom Objektiv erfassten Bildbereiches. Eine Drehung kann in einigen Ausführungsformen fortlaufend in einer Drehrichtung erfolgen, sodass die Kamera bzw. deren Bilderfassungsbereich, ununterbrochen der Bewegung eines rotierenden Bauteils nachgeführt werden kann.

In anderen Ausführungsformen der Erfindung kann eine Drehung nur um einen vorgebbaren Winkelbereich erfolgen, welcher geringer oder gleich 360° ist. In anderen Ausführungsformen der Erfindung kann der Winkelbereich der Drehung kleiner oder gleich 270° oder kleiner oder gleich 180° oder kleiner oder gleich 90° sein. Die Kamera bzw. der Bilderfassungsbereich führen somit fortlaufend eine Hin- und Her-Drehung bzw. eine Wipp-Bewegung aus. Hierdurch wird die Bewegung der Klamera bzw. des Bildsensors zumindest für den Moment der Aufnahme mit der Bewegung des Bauteils synchronisiert. Dies erlaubt die Verwendung einer Kabelverbindung zur Kamera zur Stromversorgung und zum Datenaustausch. Die Datenrate kann somit insbesondere bei hochauflösenden Bildsensoren durch diese Maßnahme erhöht sein.

In einigen Ausführungsformen der Erfindung kann die Nachführeinrichtung eine Schwenk-Neige-Plattform enthalten, auf welcher zumindest die erste Kamera und der optionale Laser montiert sind. Die Schwenk-Neige-Plattform enthält in an sich bekannter Weise eine Plattform, auf welcher die zu bewegenden Komponenten der Vorrichtung montiert sind und welche pneumatisch, hydraulisch oder elektromotorisch bewegt wird. Hierzu kann die Plattform um zumindest eine Achse, bevorzugt aber um mindestens zwei Achsen, verdreht bzw. geschwenkt werden. In anderen Ausführungsformen der Erfindung kann die Plattform auf einem Hexapod angeordnet sein, welches eine Drehung und ein Verschwenken der Plattform durch Längenänderung der einzelnen Beine des Hexapods ermöglicht.

In einigen Ausführungsformen der Erfindung enthält die Nachführeinrichtung zumindest einen beweglichen Spiegel, welcher den Strahlengang eines Objektivs der ersten Kamera und/oder den Strahlengang des optionalen Lasers umlenkt. Im Gegensatz zur Bewegung der gesamten Kamera kann ein Spiegel reduzierte bewegte Massen aufweisen, sodass die Nachführung mit größerer Geschwindigkeit erfolgen kann.

In einigen Ausführungsformen der Erfindung kann die Nachführeinrichtung zumindest eine Drehbewegung der ersten Kamera um eine zur optischen Achse senkrechte Achse ermöglichen. In einigen Ausführungsformen der Erfindung kann die Nachführeinrichtung auch eine Drehbewegung der ersten Kamera um zwei zur optischen Achse senkrechte Achsen ermöglichen, welche ihrerseits wieder aufeinander senkrecht stehen. In speziellen Anwendungsfällen, beispielsweise bei der Überwachung einer Windenergieanlage, kann auf diese Weise der mit der Nachführeinrichtung verbundene Aufwand reduziert sein. Beispielsweise kann zur Überwachung eines Rotorsterns einer Windenergieanlage zumindest die erste Kamera unterhalb der Drehachse des Rotorsterns und in einer zur Rotorebene orthogonalen Ebene angeordnet sein. In diesem Fall durchlaufen die Rotorblätter des Rotorsterns den Bilderfassungsbereich zyklisch von oben nach unten bzw. von unten nach oben, sodass eine einzelne Schwenkbewegung der Kamera ausreicht, um die Rotorblätter entlang ihrer Längserstreckung in einer Mehrzahl von Teilflächen zu erfassen. Allgemein kann zur Überwachung eines rotierenden Bauteils zumindest die erste Kamera außerhalb der Drehachse des Bauteils angeordnet und die Bilderfassung so synchronisiert wird, dass das zu überwachende Bauteil bei der Bilderfassung in etwa orthogonal auf der Verbindungslinie zwischen der optischen Achse und der der Drehachse des Bauteils ausgerichtet ist.

In einigen Ausführungsformen der Erfindung kann die Nachführeinrichtung zumindest eine Drehbewegung der ersten Kamera um eine Achse ermöglicht, welche von der der optischen Achse verschieden ist und nicht parallel zur optischen Achse verläuft. Unter einem nicht parallelen Verlauf kann in einigen Ausführungsformen der Erfindung verstanden werden, dass die Drehachse und die optische Achse einen Winkel von mehr als 2° oder mehr als 3° oder mehr als 5° zueinander einschließen.

In einigen Ausführungsformen der Erfindung kann das zu überwachende Bauteil, beispielsweise ein Rotorstern, beidseitig der Drehachse erfasst werden. Soweit die Kamera unterhalb, seitlich oder oberhalb der Drehachse angeordnet ist, erlaubt dies eine genaue Inspektion der Vorder- und Hinterkanten des Rotorblattes.

In einigen Ausführungsformen der Erfindung kann sowohl die Vorder- als auch die Rückseite des zu überwachenden Bauteils erfasst werden. Auf diese Weise können Schäden an allen relevanten Bauteiloberflächen optisch detektiert werden.

Nachfolgend soll die Erfindung anhand von Figuren ohne Beschränkung des allgemeinen Erfindungsgedankens näher erläutert werden. Dabei zeigt
Figur 1 eine schematische Darstellung der erfindungsgemäßen Vorrichtung zur optischen Überwachung bewegter Bauteile mit einer Nachführeinrichtung gemäß einer ersten Ausführungsform der Erfindung.
Figur 2 erläutert die Durchführung des erfindungsgemäßen Verfahrens zur optischen Überwachung bewegter Bauteile.
Figur 3 zeigt eine Nachführeinrichtung gemäß einer zweiten Ausführungsform der Erfindung.
Figur 4 zeigt eine Nachführeinrichtung gemäß einer dritten Ausführungsform der Erfindung.
Figur 5 zeigt eine Nachführeinrichtung gemäß einer vierten Ausführungsform der Erfindung.
Figur 6 zeigt eine Nachführeinrichtung gemäß einer fünften Ausführungsform der Erfindung.
Figur 7 zeigt eine Nachführeinrichtung gemäß einer sechsten Ausführungsform der Erfindung.

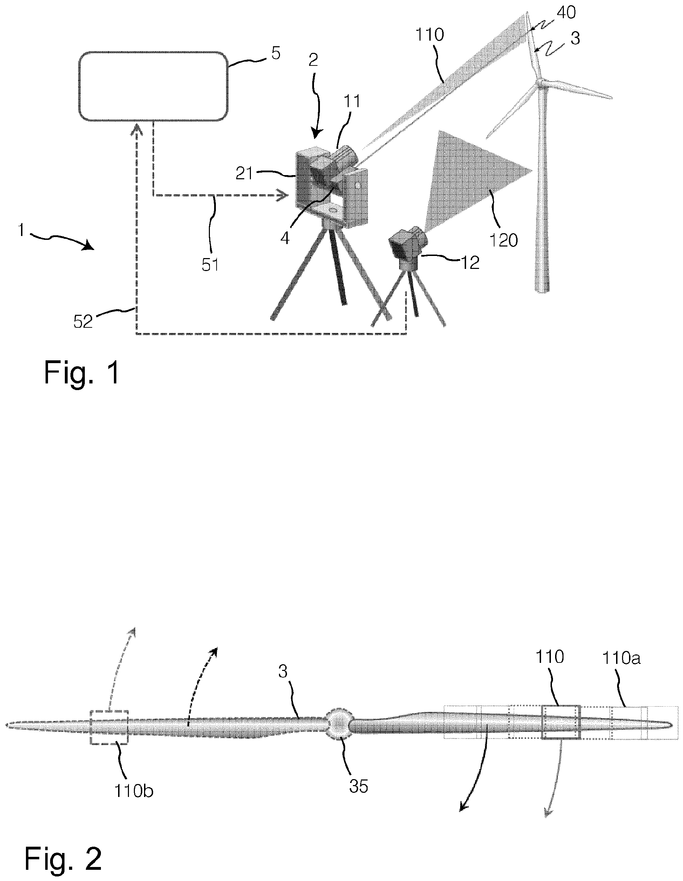

Anhand von Figur 1 wird eine Vorrichtung 1 zur optischen Überwachung bewegter Bauteile mit einer ersten Ausführungsform einer Nachführeinrichtung erläutert. In Figur 1 ist eine Windenergieanlage mit einem Rotorstern dargestellt. Der Rotorstern enthält drei Rotorblätter, welche im dargestellten Ausführungsbeispiel die zu überwachenden Bauteile 3 darstellen. Rotorblätter von Windenergieanlagen werden üblicherweise aus faserverstärkten duroplastischen Kunststoffen gefertigt. Die Rotorblätter sind durch die Rotation und den anströmenden Wind einer mechanischen Belastung ausgesetzt. Darüber hinaus sind die Rotorblätter Temperaturwechseln, Feuchtigkeit und UV-Strahlung ausgesetzt. Es handelt sich somit um hochbeanspruchte, bewegte Bauteile. Ein Versagen eines Rotorblattes hat ein erhebliches Schadpotenzial, einerseits durch herabfallende Teile. Andererseits wird auch die verbleibende mechanische Struktur der Windenergieanlage durch die Unwucht eines beschädigten Rotorsterns erheblich belastet. Es besteht somit ein Bedürfnis nach einer Überwachung der Rotorblätter, um diese bei erheblicher Schädigung vor deren Ausfall austauschen zu können. Gleichzeitig soll die Überwachung im laufenden Betrieb erfolgen, um Ertragsausfälle zu vermeiden. In gleicher Weise wie in dieser Beschreibung beispielhaft anhand der Rotorblätter einer Windenergieanlage erläutert, können selbstverständlich auch andere bewegte Bauteile 3 überwacht werden, beispielsweise Tragflächen und Rumpfstrukturen anfliegender Flugzeuge oder Teile von Produktionsmaschinen oder in der Fertigung befindliche Bauteile, welche einer Qualitätskontrolle bedürfen.

Die Vorrichtung 1 zur Überwachung bewegter Bauteile weist zumindest eine erste Kamera 11 auf. Die erste Kamera 11 weist einen Bilderfassungsbereich 110 auf, welcher durch die Größe des Bildsensors der ersten Kamera 11 und die Brennweite des mit der ersten Kamera 11 verbundenen Objektivs gegeben ist. Im dargestellten Ausführungsbeispiel ist der Bilderfassungsbereich 110 vergleichsweise eng, d. h. die erste Kamera 11 kann eine vergleichsweise kleine Fläche mit hoher Auflösung darstellen, auch wenn diese Fläche weit entfernt ist. Wie nachfolgend anhand von Figur 2 noch erläutert werden wird, können mit der ersten Kamera 11 eine Mehrzahl von Einzelbildern des Rotorblattes 3 aufgenommen werden, welche nachfolgend entweder einzeln analysiert oder zu einer Gesamtaufnahme des zu überwachenden Bauteils zusammengesetzt werden können.

Um den Bilderfassungsbereich 110 bei Bewegung des zu überwachenden Bauteils 3 nachführen zu können, ist die erste Kamera 11 auf einer Nachführeinrichtung 2 montiert. Im dargestellten ersten Ausführungsbeispiel enthält die Nachführeinrichtung 2 eine Schwenk-Neige-Plattform 21. Die Schwenk-Neige-Plattform ist auf einem Stativ drehbar befestigt, um die Horizontalrichtung des Bilderfassungsbereichs 110 verändern zu können. Darüber hinaus kann die Schwenk-Neige-Plattform über einen weiteren Antrieb vertikal bewegt werden. Die Schwenk-Neige-Plattform erlaubt es somit, die erste Kamera 11 so zu bewegen, dass der Bilderfassungsbereich 110 der Bewegung des zu überwachenden Bauteils 3 folgt.

Das Ansteuersignal der Nachführeinrichtung 2 wird über eine Steuer- oder Regeleinrichtung 5 erzeugt. Die Steuer- oder Regeleinrichtung 5 ist mit der Nachführeinrichtung 2 über eine Kabelverbindung 51 oder auch eine drahtlose Datenverbindung verbunden.

Das Ansteuersignal wird von der Steuer- oder Regeleinrichtung 5 in Abhängigkeit der Bilddaten einer zweiten Kamera 12 erzeugt, welche über eine Kabelverbindung 52 mit der Steuer- oder Regeleinrichtung 5 verbunden ist. In einigen Ausführungsformen der Erfindung kann auch hier eine Funkschnittstelle zum Einsatz kommen. Die Steuer- oder Regeleinrichtung 5 kann eine Software enthalten, welche aus Eingangsdaten ein Ansteuersignal der Nachführeinrichtung erstellt, wenn die Software auf einem Mikroprozessor ausgeführt wird.

Auch die zweite Kamera 12 ist auf einem Stativ montiert und weist einen Bilderfassungsbereich 120 auf. Der Bilderfassungsbereich 120 weist einen größeren Bildwinkel auf, d.h. die Brennweite des Objektivs der zweiten Kamera 12 ist bei gleicher Größe des Bildsensors kleiner. Die zweite Kamera 12 erfasst somit einen größeren Ausschnitt des zu überwachenden Bauteils 3 oder auch das gesamte zu überwachende Bauteil 3. Die zweite Kamera kann stationär angeordnet sein, d. h. die zweite Kamera ist nicht mit einer Nachführeinrichtung verbunden.

Aus den Bilddaten der zweiten Kamera 12, welche der Steuer- oder Regeleinrichtung 5 zugeführt werden, errechnet diese eine Bewegungsvorhersage des zu überwachenden Bauteils 3. Da der Steuer- oder Regeleinrichtung somit bekannt ist, wo sich das zu überwachende Bauteil 3 bzw. die aktuell zu erfassende Teilfläche des Bauteils 3 zum Aufnahmezeitpunkt befinden wird und auch die Stellgeschwindigkeit der Nachführeinrichtung 2 bekannt ist, kann die Steuer- oder Regeleinrichtung ein Steuersignal an die Nachführeinrichtung ausgeben, welches den Bilderfassungsbereich der ersten Kamera 11 zu vorgegebenen Zeitpunkten auf die jeweilige Teilfläche des zu überwachenden Bauteils 3 richtet. Die optionale Nachführung auch während der Aufnahme vermeidet Bewegungsunschärfe und erhöht damit die Qualität der Überwachung durch bessere Bilder

Zur Erhöhung der Genauigkeit der Nachführung kann auf der Nachführeinrichtung 2 ein optionaler Laser 4 befestigt sein, welcher einen Strahlfleck 40 auf dem zu überwachenden Bauteil 3 erzeugt. Die Lage des Strahlflecks 40 kann mit der ersten Kamera und/oder der zweiten Kamera 12 erfasst werden. Optional kann hierfür auch eine optionale dritte Kamera eingesetzt werden, welche in Figur 1 nicht dargestellt ist und welche ebenfalls mit der Steuer- oder Regeleinrichtung 5 verbunden ist. Der auf diese Weise gemessene Ist-Wert des Strahlflecks 40 wird mit gewünschten Soll-Werten verglichen, sodass die Steuer- oder Regeleinrichtung 5 ein zusätzliches Korrektursignal erzeugen und an die Schwenk-Neige-Plattform 2 ausgeben kann. Die Qualität der erfassten Bilder kann hierdurch nochmals verbessert werden, sodass eine genauere Überwachung des bewegten Bauteils 3 möglich wird.

Figur 2 zeigt nochmals ein Rotorblatt 3, welches um die Nabe 35 eines Rotorsterns rotiert. In einigen Ausführungsformen der Erfindung erfolgt die Erfassung des Rotorblattes 3 als zu überwachendes Bauteil stets zu einem Zeitpunkt, zu welchem das Rotorblatt nahezu waagerecht steht. Somit können pro Umdrehung des Rotorblattes zwei Aufnahmen mit dem jeweiligen Bilderfassungsbereich 110a bzw. 110b erstellt werden. Da in der Regel die Kamera 11 mit der Nachführeinrichtung 2 eine geringere Höhe aufweist als die Nabenhöhe der Windenergieanlage, wird im Bilderfassungsbereich 110a auch die Vorderkante des Rotorblattes sichtbar. Im Bilderfassungsbereich 110b wird hingegen zusätzlich zur Außenfläche des Rotorblattes auch die hintere Kante sichtbar.

Figur 2 zeigt auch, wie durch horizontales Verschieben des Bilderfassungsbereiches 110 durch die Nachführeinrichtung 2 eine Mehrzahl von Einzelbildern erzeugt werden kann, welche zu einer hochauflösenden Aufnahme des zu überwachenden Bauteils zusammengesetzt werden können. Sofern solche Aufnahmen sowohl auf der Anström- als auch auf der Abströmseite der Windenergieanlage erfasst werden, kann die Oberfläche des Bauteils 3 vollständig erfasst werden.

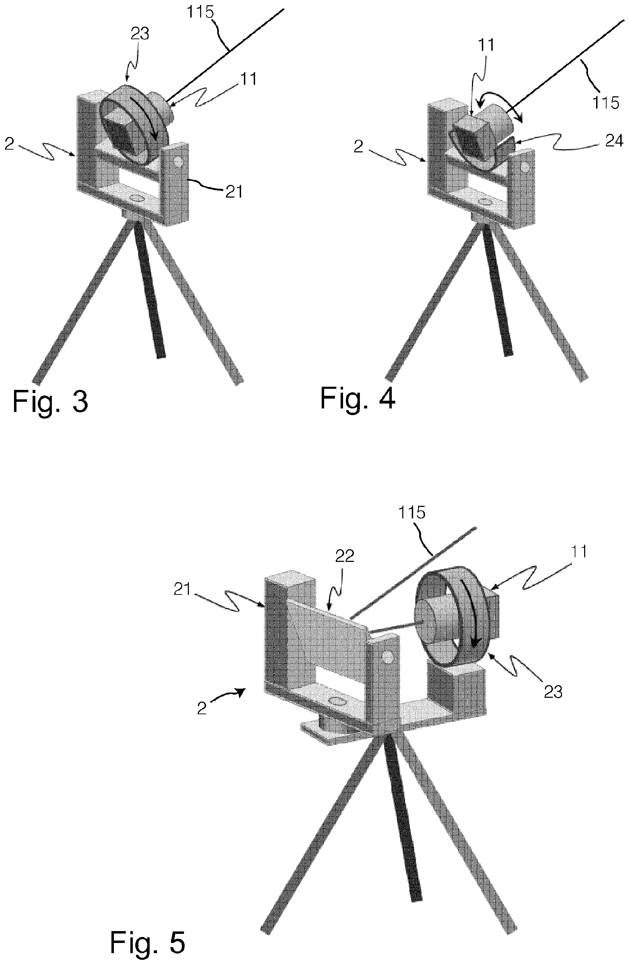

Anhand der weiteren Figuren 3 bis 7 werden alternative Ausführungsformen einer Nachführeinrichtung näher erläutert. Gleiche Bezugszeichen bezeichnen dabei gleiche Bestandteile der Erfindung, sodass sich die nachfolgende Beschreibung auf die wesentlichen Unterschiede beschränkt. In den Figuren 3 bis 7 sind die Steuer- oder Regeleinrichtung sowie die zweite Kamera 12 nicht dargestellt. Dies bedeutet jedoch nicht, dass diese Einrichtungen in den weiteren Ausführungsformen der Erfindung nicht vorhanden sind.

Anhand von Figur 3 wird eine zweite Ausführungsform der Nachführeinrichtung 2 erläutert. Auch die zweite Ausführungsform weist eine Schwenk-Neige-Plattform 21 auf, wie anhand von Figur 1 ausführlich beschrieben wurde. Zusätzlich zeigt Figur 3 eine Einrichtung 23 zur Rotation der ersten Kamera 11 um deren optische Achse 115. Die optische Achse 115 bezeichnet dabei die Symmetrieachse des Objektivs bzw. die Symmetrieachse des Bilderfassungsbereiches 110.

Durch die Rotation der ersten Kamera 11 wird dem Umstand Rechnung getragen, dass sich die Ausrichtung des Rotorblattes der Windenergieanlage im laufenden Betrieb durch dessen Rotation ändert. Bei kurzen Belichtungszeiten, welche kurz gegenüber der Rotationsgeschwindigkeit sind, kann dies vernachlässigt werden. Aufnahmen, welche eine längere Belichtungszeit erfordern, leiden jedoch in diesem Fall unter Bewegungsunschärfe. Dies kann dadurch vermieden werden, dass die erste Kamera 11 ebenfalls rotiert und so die relative Ausrichtung des Bilderfassungsbereiches 110 auf dem Bauteil 3 zumindest während der Erzeugung des Bildes unverändert bleibt. Da beispielsweise Windenergieanlagen nur vergleichsweise langsame Rotordrehzahlen von etwa 10 bis etwa 20 Umdrehungen pro Minute aufweisen, ist es möglich, die erste Kamera 11 mit der gleichen Geschwindigkeit rotieren zu lassen, sodass Bewegungsunschärfe vermieden werden kann und die Ausrichtung der ersten Kamera zum Rotorstern unverändert bleibt. Durch die so gesteigerte Qualität der aufgenommenen Bilder kann die Überwachung der bewegten Bauteile mit größerer Genauigkeit erfolgen.

Figur 4 zeigt eine dritte Ausführungsform der Nachführeinrichtung 2. Auch die dritte Ausführungsform verwendet eine Schwenk-Neige-Plattform wie vorstehend anhand der Figuren 1 und 3 beschrieben. Auch in der dritten Ausführungsform kann die erste Kamera 11 um ihre optische Achse 115 rotiert werden. Im Unterschied zur zweiten Ausführungsform gemäß Figur 3 erlaubt die Rotationseinrichtung 24 in der zweiten Ausführungsform jedoch keine volle Rotation um 360° oder ein Vielfaches davon. Vielmehr wird die erste Kamera 11 nur ausgehend von ihrer Nulllage um +/- 90° gedreht. Dies erlaubt eine Rotationsnachführung des Bilderfassungsbereiches 110 um einen entsprechenden Winkel von etwa 180° des zu überwachenden Rotorblattes. In anderen Ausführungsformen der Erfindung kann der Winkel anders gewählt sein. Sodann wird die Bilderfassung beendet und die Kamera wieder in ihre Ausgangslage zurück gedreht. Diese Ausführungsform weist den Vorteil auf, dass sowohl die Energieversorgung als auch die Datenübertragung der ersten Kamera 11 mit einer Kabelverbindung erfolgen kann, sodass höhere Datenraten ermöglicht werden können.

Figur 5 zeigt eine vierte Ausführungsform einer Nachführeinrichtung 2. Auch die vierte Ausführungsform weist eine Schwenk-Neige-Plattform 21 auf, wie vorstehend beschrieben wurde. An dieser ist jedoch nicht die erste Kamera 11 befestigt, sondern ein Spiegel 22, welcher den Strahlengang des Objektivs der Kamera 11 in die gewünschte Richtung umlenkt. In Figur 5 ist dies schematisch anhand der optischen Achse 115 dargestellt. Da auf diese Weise zur Nachführung des Bilderfassungsbereiches geringere Massen bewegt werden müssen, kann die Nachführung schneller erfolgen.

Wie Figur 5 weiter zeigt, kann auch die vierte Ausführungsform optional mit einer Einrichtung 23 zur Rotation versehen werden, welche die erste Kamera 11 um ihre optische Achse 115 rotiert.

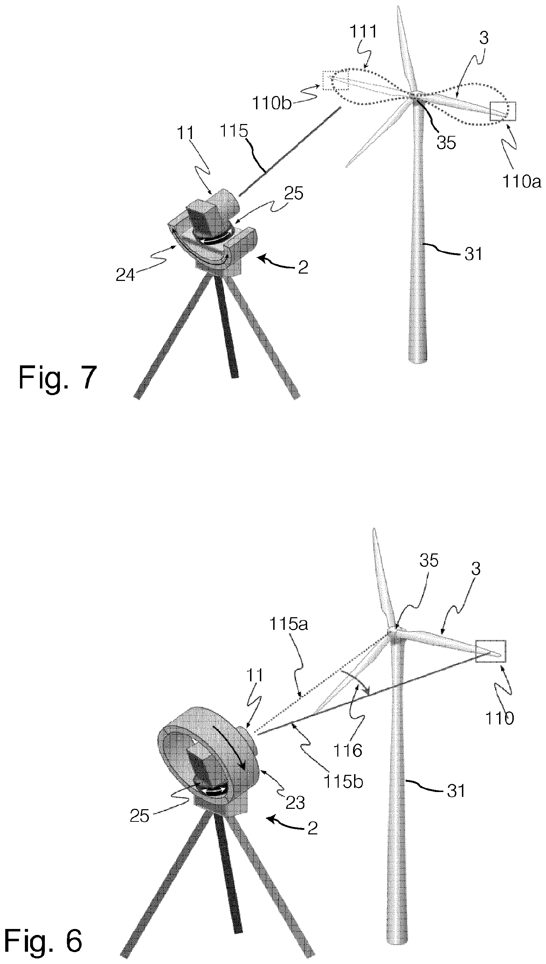

Anhand der Figuren 6 und 7 werden fünfte und sechste Ausführungsformen der Nachführeinrichtung 2 erläutert. Diese verzichten auf eine Schwenk-Neige-Plattform, sondern verwenden lediglich eine horizontale Schwenkeinrichtung 25. Wie in Figur 6 dargestellt wird, kann mittels dieser horizontalen Schwenkvorrichtung 25 der Bilderfassungsbereich von einer ersten Position 115a um einen Winkel 116 in eine zweite Position 115b verschwenkt werden. Die beiden Positionen des Bilderfassungsbereiches 110 sind dabei aus Gründen der Übersichtlichkeit durch die optische Achse 115 schematisiert.

Wird somit das zu überwachende Bauteil 3 in horizontaler Lage erfasst, wie anhand von Figur 2 dargestellt, so genügt diese horizontale Schwenkbewegung, um den Bilderfassungsbereich 110 entlang der gesamten Länge des zu überwachenden Bauteils 3 zu verschwenken.

Sofern eine kontinuierliche Bilderfassung des Bauteils 3 gewünscht ist, kann auch die fünfte Ausführungsform mit einer Einrichtung 23 zur Rotation der ersten Kamera versehen werden. Die Einrichtung 23 erlaubt es, dem umlaufenden Rotorblatt 3 durch gleichlaufende Rotation der Kamera 11 zu folgen. Gleichzeitig kann durch die horizontale Schwenkvorrichtung 25 das Rotorblatt entlang seiner Länge abgetastet werden. Somit erlaubt die in Figur 6 dargestellte fünfte Ausführungsform ebenfalls eine vollständige Nachführung des Bilderfassungsbereichs 110 bei gegenüber der ersten Ausführungsform reduziertem Aufwand durch Verzicht auf die Schwenk-Neige-Plattform.

Die sechste Ausführungsform gemäß Figur 7 weist eine ähnliche Funktionalität auf wie die vorherstehende beschriebene fünfte Ausführungsform. Allerdings wird auf eine umlaufende Rotation der ersten Kamera 11 verzichtet. Stattdessen führt die erste Kamera 11 eine Schwing- bzw. Wipp-Bewegung aus, wie vorstehend anhand der dritten Ausführungsform in Figur 4 beschrieben. Somit kann der Bilderfassungsbereich 110 gemäß der sechsten Ausführungsform entlang einer Schleifenlinie 111 bewegt werden, um auf diese Weise in einem Winkelbereich um die Horizontallinie des Rotorblattes Bilder zur optischen Überwachung mit Nachführung des Bilderfassungsbereiches 110 zu erzeugen.

Selbstverständlich ist die Erfindung nicht auf die dargestellten Ausführungsformen beschränkt. Die vorstehende Beschreibung ist daher nicht als beschränkend, sondern als erläuternd anzusehen. Sofern die Ansprüche und die vorstehende Beschreibung "erste" und "zweite" Ausführungsformen definieren, dann dient diese Bezeichnung der Unterscheidung zweier gleichartiger Ausführungsformen, ohne eine Rangfolge festzulegen.

## Patentansprüche

1. Vorrichtung (1) zur optischen Überwachung bewegter Bauteile mittels zumindest einer ersten Kamera (11), deren Bilderfassungsbereich (110) mit einer Nachführeinrichtung (2) beeinflussbar ist und welche dazu eingerichtet ist, zumindest ein Bild von zumindest einem Teil des zu überwachenden Bauteils (3) aufzunehmen, **dadurch gekennzeichnet, dass**
die Vorrichtung weiterhin zumindest eine zweite Kamera (12) aufweist, welche dazu eingerichtet ist, Bilder des zu überwachenden Bauteils zu erfassen, und
die Vorrichtung (1) weiterhin eine Steuer- oder Regeleinrichtung (5) aufweist, welcher Bilddaten der zweiten Kamera (12) zuführbar sind und mit welcher ein Ansteuersignal erzeugbar und der Nachführeinrichtung (2) zuführbar ist, und die Nachführeinrichtung (2) dazu eingerichtet ist, dem Ansteuersignal zu folgen, sodass der Bilderfassungsbereich der ersten Kamera (11) stets auf das zu überwachende Bauteil ausgerichtet ist.

2. Vorrichtung nach Anspruch 1, **dadurch gekennzeichnet, dass** die erste Kamera (11) einen kleineren Bildwinkel aufweist als die zweite Kamera (12).

3. Vorrichtung nach Anspruch 1 oder 2, **dadurch gekennzeichnet, dass** die zweite Kamera stationär angeordnet ist.

4. Vorrichtung nach Anspruch 1 bis 3, weiterhin enthaltend zumindest einen Laser (4), dessen Strahlrichtung mit der Nachführeinrichtung (2) beeinflussbar ist.

5. Vorrichtung nach Anspruch 4, weiterhin enthaltend zumindest eine dritte Kamera, welche dazu eingerichtet ist, den Strahlfleck (40) des Lasers (4) auf dem zu überwachenden Bauteil (3) zu erfassen und der Steuer- oder Regeleinrichtung (5) zuzuführen.

6. Vorrichtung nach einem der Ansprüche 1 bis 5, **dadurch gekennzeichnet, dass** die erste Kamera (11) zusätzlich um ihre optische Achse (115) drehbar ist oder der Bildsensor der ersten Kamera (11) um die optische Achse (115) der ersten Kamera (11) drehbar ist.

7. Vorrichtung nach einem der Ansprüche 1 bis 6, **dadurch gekennzeichnet, dass** die Steuer- oder Regeleinrichtung (5) eine Einrichtung zur Bewegungsvorhersage des zu überwachenden Bauteils (3) aufweist.

8. Vorrichtung nach einem der Ansprüche 1 bis 7, **dadurch gekennzeichnet, dass** die Nachführeinrichtung (2) eine Schwenk-Neige-Plattform (21) enthält, auf welcher zumindest die erste Kamera (11) montiert ist; oder
dass die Nachführeinrichtung zumindest einen beweglichen Spiegel (22) enthält, welcher den Strahlengang eines Objektivs der ersten Kamera (11) umlenkt; oder
dass die Nachführeinrichtung (2) zumindest eine Drehbewegung der ersten Kamera (11) um eine Achse ermöglicht, welche von der der optischen Achse (115) verschieden ist und nicht parallel zur optischen Achse verläuft.

9. Verwendung einer Vorrichtung (1) nach einem der Ansprüche 1 bis 8 zur Überwachung einer Windenergieanlage.

10. Verfahren zur optischen Überwachung bewegter Bauteile mit zumindest einer ersten Kamera (11), deren Bilderfassungsbereich (110) mit einer Nachführeinrichtung (2) beeinflusst wird und welche zumindest ein Bild von zumindest einem Teil des zu überwachenden Bauteils (3) aufnimmt, **dadurch gekennzeichnet, dass**
weiterhin mit zumindest einer zweiten Kamera (12) Bilder des zu überwachenden Bauteils (3) erfasst werden, und Bilddaten der zweiten Kamera (12) einer Steuer- oder Regeleinrichtung (5) zugeführt werden, welche ein Ansteuersignal erzeugt und der Nachführeinrichtung (2) zuführt und die Nachführeinrichtung (2) dem Ansteuersignal folgt, sodass der Bilderfassungsbereich der ersten Kamera (11) stets auf das zu überwachende Bauteil ausgerichtet ist.

11. Verfahren nach Anspruch 10, **dadurch gekennzeichnet, dass** die erste Kamera (11) zusätzlich um ihre optische Achse (115) gedreht wird oder
dass der Bildsensor der ersten Kamera (11) um die optische Achse (115) der ersten Kamera (11) gedreht wird.

12. Verfahren nach einem der Ansprüche 10 oder 11, **dadurch gekennzeichnet, dass** die erste Kamera (11) einen kleineren Bildwinkel aufweist als die zweite Kamera (12).

13. Verfahren nach einem der Ansprüche 10 bis 12, **dadurch gekennzeichnet, dass** die Steuer- oder Regeleinrichtung (5) eine Bewegungsvorhersage des zu überwachenden Bauteils (3) erstellt.

14. Verfahren nach einem der Ansprüche 10 bis 13, **dadurch gekennzeichnet, dass** mit zumindest einem Laser (4), dessen Strahlrichtung mit der Nachführeinrichtung (2) beeinflussbar ist, ein Strahlfleck (40) auf dem zu überwachenden Bauteil (3) erzeugt und mit einer Kamera (11, 12) erfasst wird.

15. Verfahren nach einem der Ansprüche 10 bis 14, **dadurch gekennzeichnet, dass** zur Überwachung eines rotierenden Bauteils (3) zumindest die erste Kamera (11) außerhalb der Drehachse (35) des Bauteils angeordnet und die Bilderfassung so synchronisiert wird, dass das zu überwachende Bauteil (3) bei der Bilderfassung in etwa orthogonal auf der Verbindungslinie zwischen der optischen Achse und der der Drehachse (35) des Bauteils (3) ausgerichtet ist.

16. Verfahren nach Anspruch 15, **dadurch gekennzeichnet, dass** das zu überwachende Bauteil (3) beidseitig der Drehachse erfasst wird und/oder
dass Vorder- und Rückseite des zu überwachenden Bauteils (3) erfasst werden.

## Claims

1. Apparatus (1) for optically monitoring moving components by means of at least one first camera (11), the image capture region (110) of which is able to be influenced by a tracking device (2) and which is configured to record at least one image of at least one part of the component (3) to be monitored, **characterized in that**
the apparatus furthermore comprises at least one second camera (12) which is configured to capture images of the component to be monitored, and
the apparatus (1) furthermore comprises an open-loop or closed-loop control device (5) which is able to be fed with image data from the second camera (12) and which can be used to generate a control signal and feed the latter to the tracking device (2), and the tracking device (2) is configured to follow the control signal so that the image capture region of the first camera (11) is always aligned with the component to be monitored.

2. Apparatus according to Claim 1, **characterized in that** the first camera (11) has a smaller image angle than the second camera (12).

3. Apparatus according to Claim 1 or 2, **characterized in that** the second camera is disposed in stationary fashion.

4. Apparatus according to Claims 1 to 3, furthermore containing at least one laser (4), the beam direction of which is able to be influenced by the tracking device (2) .

5. Apparatus according to Claim 4, furthermore containing at least one third camera which is configured to capture the beam spot (40) of the laser (4) on the component (3) to be monitored and feed this to the open-loop or closed-loop control device (5).

6. Apparatus according to any one of Claims 1 to 5, **characterized in that** the first camera (11) is additionally rotatable about its optical axis (115) or the image sensor of the first camera (11) is rotatable about the optical axis (115) of the first camera (11).

7. Apparatus according to any one of Claims 1 to 6, **characterized in that** the open-loop or closed-loop control device (5) has a device for predicting the movement of the component (3) to be monitored.

8. Apparatus according to any one of Claims 1 to 7, **characterized in that** the tracking device (2) contains a pan-tilt platform (21), on which at least the first camera (11) is mounted; or
**in that** the tracking device contains at least one movable mirror (22), which deflects the beam path of a lens of the first camera (11); or
**in that** the tracking device (2) facilitates at least a rotational movement of the first camera (11) about an axis that differs from the optical axis (115) and does not extend parallel to said optical axis.

9. Use of an apparatus (1) according to any one of Claims 1 to 8 for monitoring a wind turbine.

10. Method for optically monitoring moving components by means of at least one first camera (11), the image capture region (110) of which is influenced by a tracking device (2) and which records at least one image of at least one part of the component (3) to be monitored, **characterized in that**
images of the component (3) to be monitored are furthermore captured by means of at least one second camera (12), and
image data of the second camera (12) is fed to an open-loop or closed-loop control device (5), which generates a control signal and feeds the latter to the tracking device (2), and the tracking device (2) follows the control signal so that the image capture region of the first camera (11) is always aligned with the component to be monitored.

11. Method according to Claim 10, **characterized in that** the first camera (11) is additionally rotated about its optical axis (115) or
**in that** the image sensor of the first camera (11) is rotated about the optical axis (115) of the first camera (11) .

12. Method according to either of Claims 10 and 11, **characterized in that** the first camera (11) has a smaller image angle than the second camera (12).

13. Method according to any one of Claims 10 to 12, **characterized in that** the open-loop or closed-loop control device (5) creates a movement prediction for the component (3) to be monitored.

14. Method according to any one of Claims 10 to 13, **characterized in that** a beam spot (40) is generated on the component (3) to be monitored by means of at least one laser (4), the beam direction of which is able to be influenced by the tracking device (2), and said beam spot is captured by a camera (11, 12).

15. Method according to any one of Claims 10 to 14, **characterized in that** for the purposes of monitoring a rotating component (3) at least the first camera (11) is disposed away from the axis of rotation (35) of said component and the image capture is synchronized in such a way that the component (3) to be monitored is aligned approximately orthogonal on the connecting line between the optical axis and the axis of rotation (35) of the component (3) during the image capture.

16. Method according to Claim 15, **characterized in that** the component (3) to be monitored is captured on both sides of the axis of rotation and/or
**in that** the front and back side of the component (3) to be monitored are captured.

## Revendications

1. Dispositif (1) de surveillance optique de composants mobiles au moyen d'au moins une première caméra (11) dont la zone d'acquisition d'image (110) peut être influencée par une unité de suivi (2) et qui est conçue pour capturer au moins une image d'au moins une partie du composant à surveiller (3), **caractérisé en ce que**
le dispositif comporte également au moins une deuxième caméra (12) qui est conçue pour acquérir des images du composant à surveiller, et
le dispositif (1) comporte également une unité de commande ou de régulation (5) auquel des données d'image de la deuxième caméra (12) peuvent être amenées et qui génère un signal de commande et l'envoie à l'unité de suivi (2), et l'unité de suivi (2) est conçue pour suivre le signal de commande de sorte que la zone d'acquisition d'image de la première caméra (11) soit toujours orientée sur le composant à surveiller.

2. Dispositif selon la revendication 1, **caractérisé en ce que**
la première caméra (11) présente un angle de vision inférieur à celui de la deuxième caméra (12).

3. Dispositif selon la revendication 1 ou 2, **caractérisé en ce que** la deuxième caméra est disposée de manière fixe.

4. Dispositif selon la revendication 1 à 3, comprenant en outre au moins un laser (4) dont la direction de faisceau peut être influencée par l'unité de suivi (2).

5. Dispositif selon la revendication 4, comprenant en outre au moins une troisième caméra qui est conçue pour détecter la tache de faisceau (40) du laser (4) sur le composant à surveiller (3) et pour l'amener à l'unité de commande ou de régulation (5).

6. Dispositif selon l'une des revendications 1 à 5, **caractérisé en ce que** la première caméra (11) peut également tourner sur son axe optique (115) ou le capteur d'image de la première caméra (11) peut tourner sur l'axe optique (115) de la première caméra (11).

7. Dispositif selon l'une des revendications 1 à 6, **caractérisé en ce que** l'unité de commande ou de régulation (5) comporte une unité de prédiction du mouvement du composant à surveiller (3).

8. Dispositif selon l'une des revendications 1 à 7, **caractérisé en ce que**
l'unité de suivi (2) comporte une plate-forme pivotante et inclinable (21) sur laquelle au moins la première caméra (11) est montée ;
l'unité de suivi comporte au moins un miroir mobile (22) qui dévie le trajet de faisceau d'un objectif de la première caméra (11) ; ou
l'unité de suivi (2) permet au moins un mouvement de rotation de la première caméra (11) sur un axe différent de celui de l'axe optique (115) et non parallèle à l'axe optique.

9. Utilisation d'un dispositif (1) selon l'une des revendications 1 à 8 pour la surveillance d'une éolienne.

10. Procédé de surveillance optique de composants mobiles à l'aide d'au moins une première caméra (11) dont la zone d'acquisition d'image (110) est influencée par une unité de suivi (2) et qui capture au moins une image d'au moins une partie du composant à surveiller (3), **caractérisé en ce que**
des images du composant à surveiller (3) sont en outre acquises à l'aide d'au moins une deuxième caméra (12), et
des données d'image de la deuxième caméra (12) sont amenée à une unité de commande ou de régulation (5) qui génère un signal de commande et l'amène à l'unité de suivi (2) et l'unité de suivi (2) suit le signal de commande de sorte que la zone d'acquisition d'image de la première caméra (11) soit toujours orientée sur le composant à surveiller.

11. Procédé selon la revendication 10, **caractérisé en ce que**
la première caméra (11) tourne en outre sur son axe optique (115) ou
le capteur d'image de la première caméra (11) tourne sur l'axe optique (115) de la première caméra (11).

12. Procédé selon l'une des revendications 10 ou 11, **caractérisé en ce que** la première caméra (11) présente un angle de vision inférieur à celui de la deuxième caméra (12) .

13. Procédé selon l'une des revendications 10 à 12, **caractérisé en ce que** l'unité de commande ou de régulation (5) crée une prédiction de mouvement du composant à surveiller (3).

14. Procédé selon l'une des revendications 10 à 13, **caractérisé en ce qu'**une tache de faisceau (40) est générée sur le composant à surveiller (3) à l'aide d'au moins un laser (4), dont la direction de faisceau peut être influencée par l'unité de suivi (2), et est détectée à l'aide d'une caméra (11, 12).

15. Procédé selon l'une des revendications 10 à 14, **caractérisé en ce que**, pour surveiller un composant rotatif (3), au moins la première caméra (11) est disposée à l'extérieur de l'axe de rotation (35) du composant et l'acquisition d'image est synchronisée de sorte que le composant (3) soit orienté sensiblement orthogonalement à la ligne de liaison entre l'axe optique et l'axe de rotation (35) du composant (3) lors de l'acquisition d'images.

16. Procédé selon la revendication 15, **caractérisé en ce que**
le composant à surveiller (3) est détecté de part et d'autre de l'axe de rotation et/ou
le côté avant et le côté arrière du composant à surveiller (3) sont détectés.
